# EUROPEAN PATENT APPLICATION

(11) **EP 3 211 501 A1**
(43) Date of publication of application: **30.08.2017**
(21) Application number: 16156963.7
(22) Date of filing: 23.02.2016
(51) Int. Cl.: G05B 23/02, G06F 3/12, G05B 19/042, G05B 19/05, G05B 9/02

(54) **DATA ACQUISITION DEVICE AND PROCESS CONTROL SYSTEM WITH IMPROVEMENTS RELATING TO TRIP CAUSE STUDY**

(71) Applicant: ABB Schweiz AG, 5400 Baden (CH)
(72) Inventor: Schubert, Jörg, 31275 Lehrte (DE); Norberg, Robert, 63223 Eskilstuna (SE); Bollmeyer, Stefan, 32425 Minden (DE)
(74) Representative: Marks, Frank

(57) **Abstract**

Data acquisition device (1) for an industrial process control system (100), comprising an analog input port (2) for a measurement signal (21), a digital interface (3) for communications with the process control system (100) and an analog-digital conversion module (4) configured to generate digitally encoded samples (22) of the measurement signal (21) and to send the samples (22) to the digital interface (3) for forwarding to the process control system (100), wherein the data acquisition device (1) further comprises a comparator (5) and a time stamping module (6), wherein the comparator (5) is configured to compare the measurement signal (21, 22) to at least one pre-set threshold (21 a, 21 b, 21 c, 21 d) and send, to the time stamping module (6), information (23) whether the measurement signal (21, 22) oversteps the threshold (21 a, 21 b, 21 c, 21 d) and wherein the time stamping module (6) is configured to combine the information (23) and a time stamp (6a) into a message (61) and to send the message (61) to the digital interface (3) for forwarding to the process control system (100).

An industrial process control system (100) with at least one controller (110) and at least one data acquisition device (1), wherein the controller (110) has a digital interface (111) in communication with the digital interface (3) of the data acquisition device (1) and wherein the controller (110) is configured to process samples (22) and messages (61) obtained from the data acquisition device (1).

## Description

The invention relates to a data acquisition device and to an industrial process control system with improvements regarding the cause study in case of trips or shutdowns.

### Background of the invention

In many industrial processes, the occurrence of certain events or the deviation of certain parameters from a pre-set operating range may trigger a trip or shutdown of a piece of equipment, or even of the entire process. This may be controlled by an application running on a controller of a distributed control system, DCS, and/or by a Safety Instrumented System, SIS.

The trip or shutdown is meant to bring, as a top priority, the equipment and the plant into a safe state in case of an unexpected problem, thus preventing that the problem gets worse and compromises the safety and integrity of the plant, the health of personnel, or the environment.

Once the safe state is attained, the next priority is to analyze what went wrong and triggered the trip or shutdown in the first place. In a complex process, the final event upon which the trip or shutdown was initiated by the DCS or SIS need not be related to the root cause of a problem in a transparent manner. Rather, an initial failure may cause a chain reaction that unfolds on a time scale of tens of milliseconds. An exact knowledge of the sequence of events is required to determine the initial failure and correct the problem.

Industrial process control systems get information from many sources throughout the plant. This information consists, inter alia, of event messages and of analog parameter readings.

Event message relates to discrete events that occur at a certain point in time, such as a door opening or a burst disk rupturing. These messages are time stamped with the exact time at which the event was detected, with an uncertainty down to 1 ms.

Analog readings are supplied by sensors and transmitted to a controller at the heart of the control system as a steady stream of data. Each reading takes some time to propagate through the network to the controller, and the controller takes some time to process it as well. These time delays depend on the current load of the network and of the controller and are therefore varying. Therefore, when the controller detects that an analog reading is abnormal, there is a rather large uncertainty of about 100 ms regarding the exact time at which the parameter physically went awry. If a chain reaction unfolds on a faster time scale, it may be impossible to determine the exact sequence of events.

### Object of the invention

It is the object of the present invention to reduce the uncertainty with which an industrial process control system can determine the time at which a parameter reading has become abnormal.

To this end, a data acquisition device and an industrial process control system comprising at least one such data acquisition device are provided.

### Disclosure of the invention

The present invention provides a data acquisition device for an industrial process control system. This data acquisition device comprises an analog input port for a measurement signal, a digital interface for communications with the process control system and an analog-digital conversion module configured to generate digitally encoded samples of the measurement signal and to send the samples to the digital interface for forwarding to the process control system.

The measurement signal may be any signal having a property that is correlated to a physical quantity which is relevant for the industrial process in question. For example, the signal may be an electrical signal that varies in voltage or current depending on the physical quantity. The signal may also, for example, be an AC electrical signal that varies in amplitude, phase or frequency depending on the physical quantity. The signal may also, for example, consist of a sequence of discrete pulses where the rate of pulses per second depends on the physical quantity.

There are no inherent limits as to which physical quantities can be monitored. The physical quantity may, for example, be a temperature, a pressure, a voltage, a current, a force, a flow rate, the position of a valve element, or a chemical composition. Even if the measurement of such quantity by a sensor introduces a delay, such delay will not limit the accuracy with which the exact time of an abnormality can be detected, because such delay will be constant and therefore readily available.

The samples may be acquired at any resolution that is at least detailed enough so that an abnormality can be detected at the desired time scale. Typical resolutions for analog readings range between 10 and 16 bits per sample. The interval between samples (sampling rate) should correspond to, or be shorter than, the intended precision in time with which abnormalities are to be detected.

The digital interface may be any suitable interface that permits at least a one-way transmission of data to a controller of the process control system. It may, for example, be a field bus or wireless or other network interface, and the data may be forwarded to the controller via one or more network infrastructure components.

According to the invention, the data acquisition device further comprises a comparator and a time stamping module. The comparator is configured to compare the measurement signal to at least one pre-set threshold and send, to the time stamping module, information whether the measurement signal oversteps the threshold. The time stamping module is configured to combine the information supplied by the comparator and a time stamp into a message and to send the message to the digital interface for forwarding to the process control system.

The inventors have found that the combination of these features eliminates the largest sources of the uncertainty for determining the time at which a process parameter physically went awry. None of the delays that the message will encounter on its path through a network to a controller, or during processing by the controller, will change the time stamp. The controller will use the time stamp, rather than the time of receipt of the message, to determine the time at which the pre-set threshold was overstepped.

The pre-set threshold may be a fixed value, a value that is configured upon installation and setup of the device, or a value that may be updated via the digital interface or any other suitable maintenance channel. The value of the pre-set threshold may, for example, be updatable by the controller of the process control system.

The time stamping module may obtain the current time from any suitable time source, such as a precise internal clock that is kept synchronized with an external reference time source. The reference time source may, for example, be a central time source in the process control system. If the data acquisition device is installed in a prominent position where a GPS or other radio-based time signal is available, the internal clock may also be directly synchronized to this time source.

The pre-set threshold may be an upper threshold that the measured value of the measurement signal is not to reach or exceed during normal operation, or it may be a lower threshold that the measured value of the measurement signal is not to reach or underrun during normal operation. Either way, if the condition for normal operation is not fulfilled, it is determined by the comparator that the threshold has been overstepped.

The use of the messages sent by the time stamping module is not limited to the post-mortem analysis of trips or shutdowns. Rather, the application running on the controller of the process control system no longer needs to implement the functionality of comparing whether parameters exceed thresholds. This obviates the need for application developers to write redundant code. In addition, the processing of critical messages and the initiating of safety trips or shutdowns can be moved out of the user-modifiable application running on the controller entirely. In this way, the user can be prevented from inadvertently disabling the triggering of a trip or shutdown that is critical for safety while changing something in the application. The invention permits to decouple the normal operation from the safety layer, so that the user can freely modify his application without having to verify time and time again whether the safety layer is still working after his changes have been applied.

The comparator may be configured to compare the measurement signal to the threshold in the analog domain. The comparator can then be a rather simple analog component, and it can react very fast to an overstepping of the threshold. The threshold may, for example, be set on the comparator by some physical adjustment mechanism, such as a potentiometer. The threshold may, for example, also be supplied to an analog comparator in the form of a voltage, current or other electrical signal to which the input signal is compared.

In an alternative embodiment, the comparator may be configured to compare a digitally encoded sample of the measurement signal to the threshold. The comparator then decodes the measured value from the sample and compares it to the threshold. The encoding of the sample by the analog-digital conversion module and the decoding by the comparator will introduce a delay, but this delay will be constant and therefore known. It will therefore not impede the precision of the exact time that can be attributed to the overstepping of the threshold. The main advantage of having the comparator in the digital domain is that it can be implemented in the existing microcontroller of the data acquisition device, for example, in software or in firmware.

Wherever a delay between the physical changing of a parameter and the reaction of the comparator is known, the time stamping module may optionally be configured to correct the time stamp for this delay. For example, a temperature sensor may take a certain time to respond because the sensor itself is an object that has a thermal capacity, and/or the analog-digital conversion may introduce a constant delay. It is advantageous to correct the time stamp for such delays because these delays may be different for different parameter readings. For example, a piezoelectric force sensor is likely to respond faster than said temperature sensor. If an industrial process control system comprises a plurality of different sensors, a sequence of events can be determined more reliably if all known delays have been corrected for in the time stamps provided by each data acquisition device.

Advantageously, the data acquisition device further comprises a nonvolatile memory to store at least one message. A larger-scale trip or shutdown may affect the network connection between the data acquisition device and a controller in the process control system, and/or the power supply to the data acquisition device. This may cause the message to be lost, eliminating a potentially important piece of evidence in the analysis of the root cause for the trip or shutdown. The nonvolatile memory prevents such loss of a message. If the lifetime of the nonvolatile memory is limited in terms of write cycles, its life can be extended by recording a message in this memory only if it is known or likely that the message cannot be delivered to a controller of the process control system. For example, a message may be recorded if an error occurs upon its transmission over the network, or if the power supply fails.

A message may, for example, be sent via the digital interface only if the comparator has determined that the threshold has been overstepped. The use of extra network bandwidth is then kept to a minimum. However, an operator may also choose that messages be transmitted, at least in certain time intervals, even if the threshold is not overstepped. Such a message then contains the time-stamped information that the threshold has not been overstepped. In this manner, it can be periodically verified that the comparator and the time stamping module are working, so that they are available in case of a trip or shutdown. In an extreme case, the operator may also choose that such a time stamped message be generated out of each and every acquired sample of the measurement signal. However, this will be useful mostly for debugging purposes, because the additional network bandwidth utilization may be too high for normal operation.

In a specially advantageous embodiment of the invention, the data acquisition device further comprises at least one sensor for a physical quantity, and the sensor is connected to the input port. The time stamping module then knows which type of sensor is present and how long this sensor takes to respond to a change in the measured physical quantity. The time stamps can therefore be corrected for this delay, so as to facilitate the exact determination of a sequence of events in a setting where many data acquisition devices with many different types of sensors are present. In a typical industrial setting, a plant may comprise on the order of 10,000 different physical quantities, each of which may be the root cause for a trip or shutdown if it deviates from a normal operating range.

The input port may, for example, be configured to receive the measurement signal via a 4-20 mA current loop. This is a mode of transmission that is immune to electrical noise and to voltage drops when the signal is transmitted from the sensor over a certain distance. It also allows for an easy detection of certain failures in the wiring of the loop.

Preferably, the time stamping module is configured to obtain clock synchronization information from the process control system. Most preferably, this clock synchronization information is supplied by a central time source in the process control system. To arrange a number of events, messages and readings in the correct temporal sequence, the absolute precision of the time supplied by this time source is not important. It is only important that the clocks of all entities that issue time stamps are synchronized to one common time base.

Preferably, the comparator is configured to compare the measurement signal to multiple thresholds. At least two of the thresholds may, for example, enclose a range in which the measurement signal is considered normal. For example, the normal operating range may be bounded by a first upper threshold H and a first lower threshold L. In addition, a second upper threshold HH that is higher than the first upper threshold H, as well as a second lower threshold LL that is lower than the first lower threshold L, may be used. This may be used for a more fine-grained determination of different types of failures. For example, when the measured physical quantity is a current in an electrical circuit, a current that is higher than the first upper threshold H but lower than the second upper threshold HH may indicate that the circuit supplies too many components and is therefore overloaded. If the current exceeds the second upper threshold HH, on the other hand, this may indicate that the circuit is shorted.

Where multiple thresholds are used, the information whether each of these thresholds is overstepped at a certain point in time may be combined into one single time stamped message. Sticking to the previous example with four thresholds H, L, HH and LL, it can be encoded into a Boolean signal (FALSE/TRUE, 0/1, one bit) if each of these thresholds is overstepped. The combined information then comprises four bits, and the message comprises these four bits plus the time stamp. This is more economical in terms of network bandwidth than sending separate messages pertaining to each threshold, which would involve sending the same redundant time stamp three more times. The higher the resolution of the time stamp, the more bits of network bandwidth it consumes.

From the preceding disclosure, it is apparent that the invention also relates to an industrial process control system that comprises at least one controller and at least one data acquisition device according to the invention. The disclosure pertaining to the data acquisition device is also relevant for the industrial process control system, and vice versa.

The controller has a digital interface that is in communication with the digital interface of the data acquisition device. The controller is configured to process samples and messages obtained from the data acquisition device. Specifically, the controller may capture and record time stamped messages from the data acquisition units, as well as time stamped messages relating to other discrete events, so that in case of a trip or shutdown, all discrete events and all oversteppings of thresholds reported by the data acquisition devices can be aggregated in a timeline. This allows for a determination of the sequence of events, so as to determine the root cause that started the chain reaction.

For example, in an electric distribution network, the failure of one of several parallel components will cause the load current to be re-distributed among the remaining components. Since this will drastically increase the load current per component, they may become overloaded and trip off one by one in a very rapid sequence. In the post-mortem analysis, it may then be determined that immediately before the failure of the first component, there had been a voltage spike on the bus bar that connects all components because of a feedback from a faulty electric motor. It can then be determined that the first tripped component was not the root cause for the complete shutdown - it was merely, by chance, the first component to go in response to the voltage spike. The faulty electric motor that caused the voltage spike can be pinpointed as the true root cause.

Preferably, the industrial process control system comprises a plurality of data acquisition devices that are connected to the at least one controller via a network. Most preferably, the system further comprises a time source configured to distribute clock synchronization information within the network. The time source may be synchronized to an off-plant external time source, such as GPS or DCF-77, but this is optional. What matters is that all time stamps in the system are based on the same time base, so as to determine a correct sequence of events.

The network can be of any suitable type. For example, it may be a standard Ethernet network. Preferably, however, the network is a field bus network specifically adapted for process control systems. It may, for example, be a Profibus network. Such a network is a bit-serial network where cyclic routine transmissions, acyclic event messages and broadcast information all share the same medium, and all transmissions are scheduled in a master-slave manner in combination with token passing. In such a network, the data acquisition devices are slaves and have to wait before transmitting. The delay varies according to the current network load, which is even more pronounced if there is at least one I/O head station between the controller and the data acquisition device. According to the invention, however, this delay will no longer introduce an uncertainty into the determination of the exact time at which an analog reading overstepped a threshold.

Advantageously, the industrial process control system comprises alerting means to alert the data acquisition device in response to a trip event that gives rise to a process or equipment shutdown. If the data acquisition devices are equipped with a nonvolatile memory, this alert can prompt them to record messages to said memory. In the event that the shutdown escalates to a catastrophic failure and takes out the power supply to the data acquisition devices, and/or the network connection to the controller, this will prevent messages containing potentially important evidence about the root cause of the situation from being lost.

In the following, the invention is explained and illustrated using Figures without any intention to limit the scope of the invention.

### Description of the Figures

- Figure 1:: Embodiment of the industrial process control system 100 and the data acquisition device 1 according to the invention.
- Figure 2:: Use of different thresholds 21a-21d for the signal 21.

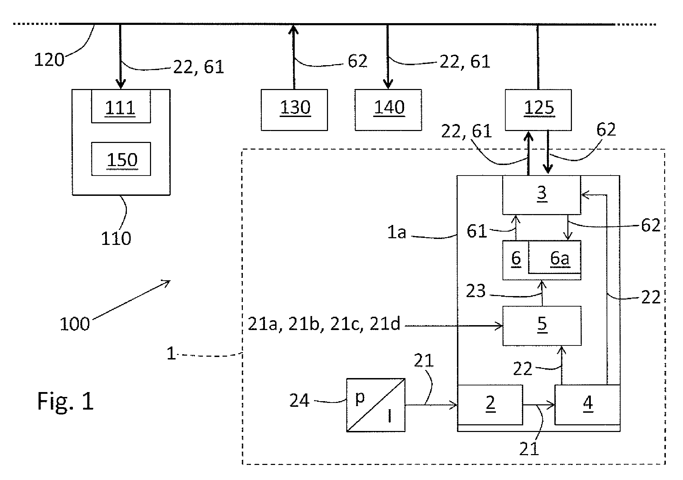

Figure 1 shows a process control system 100 according to the invention. The system 100 comprises a controller 110 and multiple data acquisition units 1 attached to a field bus network 120, wherein the data acquisition units 1 are attached to the network 120 via I/O head stations 125. For clarity, only one data acquisition unit 1 and one I/O head station 125 are shown in Figure 1.

The data acquisition unit 1 comprises a main unit 1a and a sensor 24. In this exemplary embodiment, the sensor 24 is a pressure sensor that converts a pressure p into a current **I**. This current **I** is fed into the input port **2** of the data acquisition unit **1** as a measurement signal **21** via a 4-20 mA current loop. The measurement signal **21** is forwarded from the input port **2** to the analog-digital conversion module **4,** where digitally encoded samples **22** of the measurement signal **21** are produced. The samples **22** are forwarded to the digital interface **3** of the data acquisition device **1** that provides connectivity with the rest of the process control system **100.** The digital interface **3** forwards the samples **22** to the digital interface **111** of the controller **110** via the network **120.**

At the same time, the samples **22** are passed on to the comparator **5.** The comparator **5** operates in the digital domain and compares the samples **22** to four independent pre-set thresholds **21 a, 21 b, 21 c** and **21** d. The comparator **5** forwards combined information **23** whether the value of the measurement signal **21** encoded in the samples **22** oversteps each of these thresholds **21 a, 21 b, 21 c** and 21 **d** to the time stamping module **6.**

The time stamping module **6** obtains clock synchronization information **62** from a central time source **130** that is attached to the network **120.** It applies a time stamp **6a** to the information **23,** and combines the information **23** and the time stamp **6a** into a message **61.** This message **61** is sent to the digital interface **3** for forwarding to the rest of the process control system **100,** especially to the digital interface **111** of the controller **110** as well as the safety circuit **140.**

The samples **22** and the messages **61** are also forwarded to a safety circuit **140** that decides whether a trip or shutdown shall be initiated due to abnormal events or measured values obtained from the plant. This safety circuit **140** is independent from the user application **150** that runs on the controller **110** and manages the normal operation of the system **110.** In this manner, the initiation of a trip or shutdown cannot be inadvertently defeated by the user who modifies the application **150** to suit his needs.

If a trip or shutdown is initiated, the safety circuit **140** alerts all data acquisition devices **1.** In response to such an alert, the data acquisition devices **1** will record messages **61** in a nonvolatile memory inside the main unit **1a** that is not shown in Figure 1 for clarity. In this manner, it is ensured that potentially important evidence about the root cause of the trip or shutdown is preserved even if the situation escalates to a point where it becomes impossible to transport the message **61** to the controller **110.**

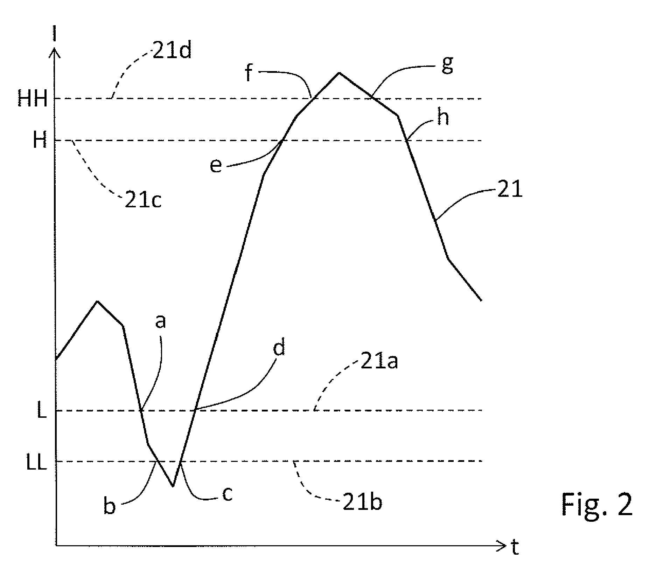

Figure 2 shows an exemplary variation of a measurement signal **21** over the time t and illustrates the use of different thresholds **21 a, 21 b, 21 c** and **21 d** for this signal 21. The measurement signal **21** is the current **I** on the 4-20 mA current loop.

A first lower threshold **21 a** corresponds to a current value of L. A second lower threshold **21 b** corresponds to an even lower current value of LL. Likewise, a first upper threshold **21 c** corresponds to a current value of **H.** A second upper threshold **21 d** corresponds to an even higher current value of **HH.** The first lower threshold **21a** and the first upper threshold **21 c** enclose the range in which the measurement signal **21** is considered normal.

In the example shown in Figure 2, at point **a,** the measurement signal **21** oversteps the first lower threshold **21 a.** This will result in messages **61** with information **23** where a bit corresponding to the threshold **21a** will be set to 1 (TRUE). The measurement signal **21** falls even more and oversteps the second lower threshold **21 b** as well at point **b.** From this point on, in the information **23,** both a bit corresponding to the threshold **21a** and a bit corresponding to the threshold **21** b will be set to 1 (TRUE). The measurement signal **21** subsequently assumes a minimum and rebounds. At point **c,** it climbs back above the second lower threshold **21 b,** so in the information **23,** the bit corresponding to the threshold **21 b** will be cleared to 0 (FALSE), while the bit corresponding to the threshold **21a** will remain 1 (TRUE). When the measurement signal **21** climbs back over the first lower threshold **21 a** at point **d,** the bit corresponding to this threshold **21 a** will be cleared to 0 (FALSE) as well. The measurement signal **21** is back in the range where it is considered normal, so, optionally, the sending of messages **61** can now be dispensed with or reduced to periodic "keep-alive" messages **61** so that it can be tracked by the controller **110** that the monitoring of the measurement signal **21** is still working.

Likewise, at point **e,** the measurement signal **21** climbs over the first upper threshold **21c,** causing the corresponding bit to be set in the information **23** that goes into subsequent time stamped messages **61.** At point f, the measurement signal **21** climbs even higher over the second upper threshold **21 d,** so the bit that corresponds to the threshold **21** d will be set as well in the information **23.** The measurement signal **21** then assumes a maximum and rebounds. At point **g,** it recedes back under the second upper threshold **21** d, clearing the corresponding bit in the information **23.** At point **h,** the measurement signal recedes back under the first upper threshold **21 c** as well, so the bits corresponding to all thresholds **21a-21d** are now cleared to 0 (FALSE) in the information **23.**

### List of reference signs

- 1: data acquisition device
- 1a: main unit of device 1
- 2: input port of device 1
- 3: digital interface of device 1
- 4: analog-digital conversion module
- 5: comparator
- 6: time stamping module
- 6a: time stamp
- 21: measurement signal
- 21a, 21b, 21c, 21d: pre-set thresholds for measurement signal 21
- 22: digital samples of measurement signal 21
- 23: information whether thresholds 21 a-21 d are overstepped
- 24: sensor
- 61: message generated in time stamping module 6
- 62: clock synchronization information
- 100: process control system
- 110: controller of system 100
- 111: digital interface of controller 110
- 120: network of system 120
- 125: I/O head station in network 120
- 130: time source of system 100
- 140: safety circuit of system 100
- 150: user application running on controller 110
- a-h: points in time t where thresholds 21 a-21 d are passed
- H: value of first upper threshold 21c
- HH: value of second upper threshold 21 d
- I: current
- L: value of first lower threshold 21 a
- LL: value of second lower threshold 21 b
- p: pressure
- t: time

## Claims

1. Data acquisition device (1) for an industrial process control system (100), comprising an analog input port (2) for a measurement signal (21), a digital interface (3) for communications with the process control system (100) and an analog-digital conversion module (4) configured to generate digitally encoded samples (22) of the measurement signal (21) and to send the samples (22) to the digital interface (3) for forwarding to the process control system (100), **characterized in that** the data acquisition device (1) further comprises a comparator (5) and a time stamping module (6), wherein the comparator (5) is configured to compare the measurement signal (21, 22) to at least one pre-set threshold (21 a, 21 b, 21 c, 21 d) and send, to the time stamping module (6), information (23) whether the measurement signal (21, 22) oversteps the threshold (21 a, 21 b, 21 c, 21 d) and wherein the time stamping module (6) is configured to combine the information (23) and a time stamp (6a) into a message (61) and to send the message (61) to the digital interface (3) for forwarding to the process control system (100).

2. Data acquisition device (1) according to claim 1, wherein the comparator (5) is configured to compare the measurement signal (21) to the threshold (21 a, 21 b, 21 c, 21 d) in the analog domain.

3. Data acquisition device (1) according to claim 1, wherein the comparator (5) is configured to compare a digitally encoded sample (22) of the measurement signal to the threshold (21a, 21b, 21c, 21d).

4. Data acquisition device (1) according to any one of claims 1 to 3, further comprising a nonvolatile memory to store at least one message (61).

5. Data acquisition device (1) according to any one of claims 1 to 4, further comprising at least one sensor (24) for a physical quantity, wherein the sensor (24) is connected to the input port (2).

6. Data acquisition device (1) according to any one of claims 1 to 5, wherein the input port (2) is configured to receive the measurement signal (21) via a 4-20 mA current loop.

7. Data acquisition device (1) according to any one of claims 1 to 6, wherein the time stamping module (6) is configured to obtain clock synchronization information (62) from the process control system (100).

8. Data acquisition device (1) according to any one of claims 1 to 7, wherein the comparator is configured to compare the measurement signal to multiple thresholds (21 a, 21 b, 21 c, 21 d).

9. Data acquisition device (1) according to claim 8, wherein at least two of the thresholds (21 a, 21 b, 21 c, 21 d) enclose a range in which the measurement signal (21, 22) is considered normal.

10. An industrial process control system (100), comprising at least one controller (110) and at least one data acquisition device (1) according to any one of claims 1 to 9, wherein the controller (110) has a digital interface (111) that is in communication with the digital interface (3) of the data acquisition device (1) and wherein the controller (110) is configured to process samples (22) and messages (61) obtained from the data acquisition device (1).

11. Industrial process control system (100) according to claim 10, comprising a plurality of data acquisition devices (1) that are connected to the at least one controller (110) via a network (120).

12. Industrial process control system (100) according to claim 11, further comprising a time source (130) configured to distribute clock synchronization information (62) within the network (120).

13. Industrial process control system (100) according to any one of claims 11 to 12, wherein the network (120) is a field bus network.

14. Industrial process control system (100) according to any one of claims 11 to 12, wherein the network (120) is a wireless network.

15. Industrial process control system (100) according to one of the claims 13 and 14, wherein the field bus network (120) comprises at least one I/O head station (125) between the controller (100) and the data acquisition device (1).

16. Industrial process control system (100) according to any one of claims 11 to 15, further comprising alerting means (140) to alert the data acquisition device (1) in response to a trip event that gives rise to a process or equipment shutdown.
